# EUROPÄISCHE PATENTANMELDUNG

(11) **EP 1 061 685 A2**
(43) Veröffentlichungstag der Anmeldung: **20.12.2000**
(21) Anmeldenummer: 00440148.5
(22) Anmeldetag: 19.05.2000
(51) Int. Cl.: H04J 14/02, H04L 1/00, H04B 10/18

(54) **Méthode de transmission de données par un système de transmission à multiplexage des ondes, et système de transmission à multiplexage des ondes**

(30) Priorität: 16.06.1999 DE 19927451
(71) Anmelder: ALCATEL, 75008 Paris (FR)
(72) Erfinder: Bülow, Dr. Henning, 70597 Stuttgart (DE)
(74) Vertreter: Rausch, Gabriele, Dr.

(57) **Zusammenfassung**

Es wird ein Verfahren zur Übertragung von Daten über ein optisches WDM-Übertragungssystem vorgeschlagen, wobei Datenkanäle für die Übertragung gemultiplext und nach der Übertragung wieder demultiplext werden und die Daten des einzelnen Datenkanals 1 auf mindestens 2 Wellenlängenkanäle 14 verteilt werden. Ergänzend können den Daten der einzelnen Datenkanäle redundante Informationen zugefügt werden.

## Beschreibung

Die Erfindung geht aus von einem Verfahren zur Übertragung von Daten über ein optisches WDM-Übertragungssystem sowie von einem WDM-Übertragungssystem nach der Gattung der unabhängigen Ansprüche.

Für die Übertragung von Daten über eine Glasfaserstrecke wird Licht unterschiedlicher Wellenlänge eingesetzt. Um die große Bandbreite einer Glasfaserübertragungsstrecke besser nutzen zu können, sind Wellenlängenmultiplex-Verfahren (Wavelength Division Multiplex, WDM) gebräuchlich. Hierbei werden eine Anzahl modulierter optischer Träger, deren Wellenlängen sich unterscheiden, in einer Glasfaser gleichzeitig übertragen. Auf der Sendeseite wird für jeden Kanal ein separater Sendelaser vorgesehen und die optischen Signale aller Laser werden mit Hilfe einer Koppelanordnung in eine Glasfaser eingekoppelt. In dieser laufen die Signale zum Empfänger, wo durch eine entsprechende frequenzselektive Anordnung die Kanäle wieder getrennt und optoelektronischen Empfängern zugeleitet werden. In bisher bekannten Systemen und Verfahren werden die Daten einzelner Kanäle jeweils auf einen Laser gegeben. Die Modulation des Lasers erfolgt dann entsprechend dem Datenstrom. D.h. ein Datenkanal ist fest einer bestimmten Wellenlänge zugeordnet. Kommt ein zweiter Datenkanal hinzu, ist er mit einem Laser einer zweiten Wellenlänge verbunden. Die Wellenlängenkanäle der beiden Laser werden über einen Multiplexer gemultiplextt und in eine Glasfaser eingekoppelt. Da die beiden Datenkanäle durch die Übersetzung in Wellenlängenkanäle unterschiedlicher Wellenlängen übertragen werden unterliegen die unterschiedlichen Wellenlängen auch unterschiedlichen Dispersionseffekten. Außer der chromatischen Dispersion der Faser spielt bei hohen Bitraten auch die Polarisationsmoden-Dispersion eine Rolle. Sie hat ihre Ursache in den unterschiedlichen Ausbreitungsgeschwindigkeiten der beiden orthogonal zu einander polarisierten Moden eines Wellenlängenkanals. Die Polarisationsmoden-Dispersion wirkt sich auf die Signale unterschiedlicher Wellenlängen unterschiedlich aus und beeinflußt durch ihre zeitlichen Fluktuationen die Qualität der Übertragung in einzelnen Wellenlängenkanälen.

Sinn der vorliegenden Erfindung ist es daher, ein WDM-Übertragungsverfahren bzw. ein WDM-System vorzuschlagen, in dem die einzelnen Datenkanäle mit einer geringeren Störungswahrscheinlichkeit belastet sind.

Das erfindungsgemäße Verfahren zur Übertragung von Daten über ein optisches WDM-Übertragungssystem weist dabei den Vorteil auf, daß die Daten des einzelnen Datenkanals auf mindestens zwei Wellenlängenkanäle unterschiedlicher Wellenlänge umgesetzt werden. Dadurch werden bei starker Störung eines Wellenlängenkanals durch Effekte der Polarisationsmoden-Dispersion immer noch Daten übertragen. Durch den zusätzlichen Einsatz von redundanzerhöhenden Verfahren wie z.B. FEC läßt sich dann aus den übertragenen Daten wieder die vollständige, gesendete Information rückgewinnnen. Das System wird dadurch robuster gegen die Dispersionsstörungen auf der Glasfaserübertragungsstrecke.

Besonders vorteilhaft ist das Verfahren, wenn die Daten jedes Datenkanals auf jede mögliche Wellenlänge des Wellenlängenmultiplex verteilt werden. Durch die möglichst breite Verteilung der Daten eines Kanals auf jede mögliche Wellenlänge im Wellenlängenmultiplex wird die Robustheit der Übertragung wesentlich erhöht. Die Einflüsse der Dispersionseffekte in einem einzelnen Wellenlängenkanal schlägt nicht mehr so stark auf die Qualität der übertragenen Daten eines Datenkanals durch.

Vorteilhafter weise werden zur Verbesserung des Verfahrens redundante Informationen in den Datenstrom aufgenommen, die in Form eines FEC (Forward Error Correction) Verfahrens eine wesentliche Verbesserung der übertragenen Datenqualität bewirken.

Das erfindungsgemäße WDM-Übertragungssystem weist senderseitig ein Mittel zur Verteilung der Daten der unterschiedlichen Datenkanäle auf Wellenlängenkanäle vor sowie empfangsseitig ein Mittel zur Rückverteilung dieser Daten.

Ein Ausführungsbeispiel der Erfindung ist in der Zeichnung dargestellt und in der nachfolgenden Beschreibung näher erläutert.

Es zeigt
- Fig. 1: den schematischen Aufbau eines WDM-Übertragungssystems mit Redundanzerhöhung
- Fig. 2: eine beispielhafte Aufteilung der Daten nach dem erfindungsgemäßen Verfahren.

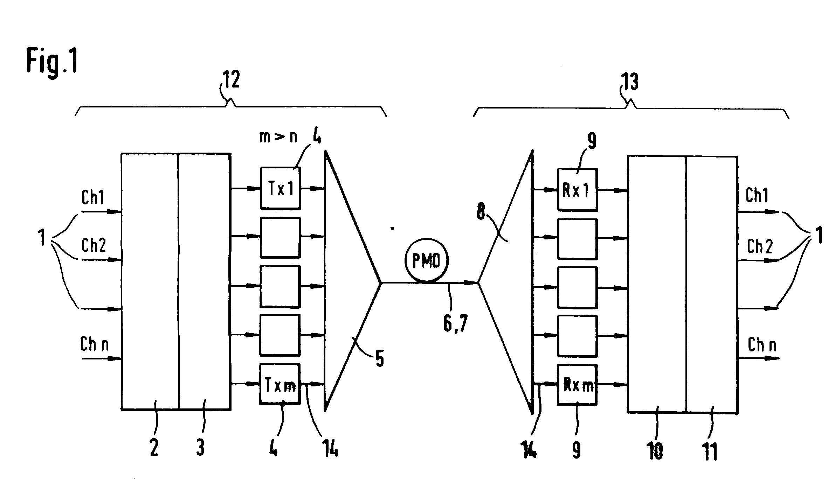

In Fig. 1 ist ein WDM-Übertragungssystem schematisch dargestellt. Ein Sender 12 ist über eine Übertragungsstrecke 6 mit einem Empfänger 13 verbunden. Am Sender 12 liegen Datenkanäle 1, hier bezeichnet mit Chl bis Chn an. Die Datenkanäle 1 sind direkt mit einem Mittel 2 zum Einfügen redundanter Information verbunden. Direkt daran angeschlossen ist ein Mittel 3 zur Wellenlängenverteilung. Die Ausgänge dieser beiden in diesem Ausführungsbeispiel als eine Einheit dargestellten Mittel 2 und 3 liegen jeweils eingangsseitig an Lasern 4 an. Die Laser 4 sind mit einem Multiplexer 5 über Wellenlängenkanäle 14 verbunden. Der Multiplexer 5 erzeugt ein Wellenlängenmultiplex 7, das über eine Übertragungsstrecke 6 am Eingang eines empfangsseitigen Demultiplexer 8 anliegt. Die Wellenlängenkanäle 14 am Demultiplexer 8 sind jeweils mit optoelektronischen Empfängern 9 verbunden. Der Ausgang der optoelektronischen Empfängern 9 liegt an einem Mittel 10 zur Rückgewinnung der Datenkanäle und einem Mittel 11 zur Rekonstruktion des ursprünglichen Datensignals aus dem redundanten übertragenen Signal an. Am Ausgang des in diesem Ausführungsbeispiel kombiniert gezeigten Mittel 10 und 11 sind die ursprünglich eingespeisten Datenkanäle 1 wieder vorhanden.

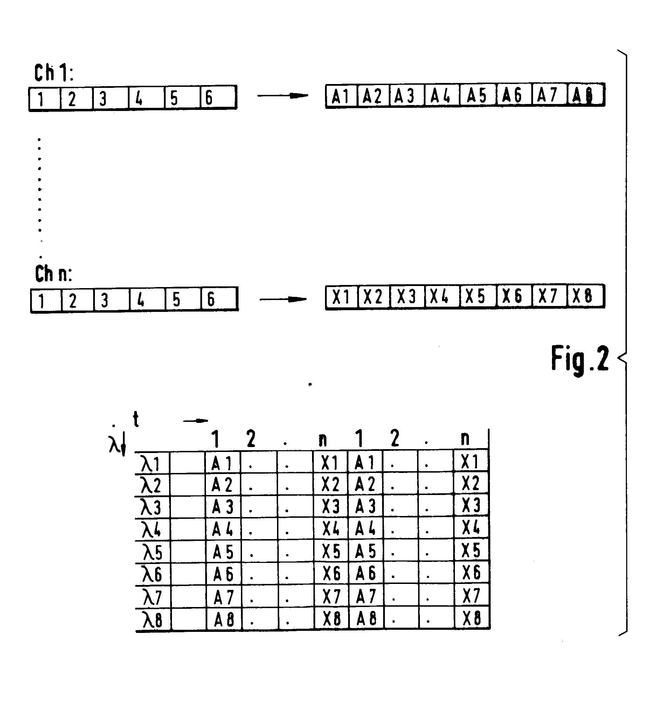

Fig. 2 zeigt an einem Beispiel wie die Daten der Datenkanäle auf Wellenlängenkanälen verteilt werden. Im oberen Teil der Fig. 2 ist schematisch ein Datenkanal Chl dargestellt. Dieser Datenkanal Chl enthält für eine Zeiteinheit von Zeit 1 bis Zeit 6 Informationseinheiten 1 bis 6. Diese Informationseinheiten 1 bis 6 werden im Mittel 3 zur Ergänzung mit redundanter Information in Informationseinheiten A1 bis A8 umgesetzt. Dabei werden die ursprünglich vorhandenen nbits in eine Zahl von mbits umgesetzt, wobei m > n ist. Dieses Verfahren erfolgt parallel für alle eingehenden Datenkanäle, so auch mit dem Datenkanal Chn dessen Informationseinheiten 1 bis 6 in redundante Informationseinheiten X1 bis X8 umgesetzt werden. Im unteren Teil der Fig. 2 ist das Schema dargestellt, in dem die redundanten Daten A1 bis A8 sowie X1 bis X8 auf die Wellenlängenkanäle verteilt werden. Man erkennt zu einem Zeitpunkt 1, daß alle Informationen eines Datenkanals nämlich A1 bis A8 auf acht unterschiedliche Wellenlängenkanäle verteilt übertragen werden. Innerhalb eines Wellenlängenkanals erfolgt die Übertragung der jeweils ersten Informationseinheit jedes Datenkanals A1 bis X1. Der Vorteil des vorgeschlagenen Verfahrens ist offensichtlich. Selbst in dem einfachsten Fall, daß die Information der Kanäle ohne redundante Information auf unterschiedliche Wellenlängenkanäle verteilt wird, ist bei Verlust von Daten auf der Übertragungsstrecke durch Dispersionseffekte kein totaler Verlust eines Kanals zu verzeichnen. Durch das Einbringen von redundanter Information verringert sich die Gefahr, die Information durch Datenverlust zu verlieren. Allerdings verringert sich auch die Übertragungsbandbreite. Ein mögliches Verfahren stellt die Forward Error Correction dar, welches bereits in optischen 10 kb/s Übertragungssystemen eingesetzt wird, siehe OFC'99 Post Deadline Paper N. Bergano et al, "640 Gbit/s Transmission of 64 WDM Channels..."

Das beschriebene Beispiel zur Verteilung der Datenkanäle in Wellenlängenkanäle kann modifiziert werden. Es ist möglich, den Einfluß von Polarisationsmoden-Dispersion in einem Wellenlängenkanal zu bestimmen und bei großen Störungen diesen Kanal aus dem Multiplex herauszunehmen. Durch Messung des PMD-Effekts pro Wellenlängenkanal ist eine dynamische Anpassung des Wellenlängenmultiplex an die aktuellen Gegebenheiten der Übertragungsstrecke möglich.

Ferner müssen die Bitraten der Wellenlängenkanäle des Senders 12 Txᵢ( i= 1 ..m) nicht mit den Bitraten der ursprünglichen Datenkanäle Chᵢ (i= 1 ...n) übereinstimmen. Lediglich das gesamte Informationsvolumen der mit Redundanz versehenen Sendedaten((n x Bitrate Ch) + Redundanz) muß mit dem Informationsvolumen des Wellenlängenmultiplex (m x Bitrate Tx) entsprechen oder kleiner sein.

## Patentansprüche

1. Verfahren zur Übertragung von Daten über ein optisches WDM (Wavelength Division Multiplex) Übertragungssystem, wobei die Datenkanäle (1) für die Übertragung gemultiplext und nach der Übertragung wieder demultiplext werden,
**dadurch gekennzeichnet,** daß die Daten des einzelnen Datenkanals (1) auf mindestens zwei Wellenlängenkanäle (14) verteilt werden.

2. Verfahren zur Übertragung von Daten über ein optisches WDM (Wavelength Division Multiplex) Übertragungssystem, wobei die Datenkanäle (1) für die Übertragung gemultiplext und nach der Übertragung wieder demultiplext werden, dadurch gekennzeichnet, daß die Daten jedes Datenkanals (1) auf jede mögliche Wellenlänge des Wellenlängenmultiplex (7) verteilt werden.

3. Verfahren nach Anspruch 1 oder Anspruch 2, dadurch gekennzeichnet, daß die Daten der Datenkanäle (1) vor ihrer Umsetzung auf die Wellenlängenkanäle (14) um redundante Information ergänzt werden.

4. Verfahren nach Anspruch 3, dadurch gekennzeichnet, daß redundanten Information in einer für das des Forward Error Correction-Verfahren geeigneten Form eingefügt wird.

5. Verfahren nach Anspruch 1 oder 2, dadurch gekennzeichnet, daß Wellenlängenkanäle schlechter Qualität im Empfänger identifiziert werden und nach Signalisierung im Empfänger Wellenlängenkanäle vom Multiplex ausgeschlossen und einbezogen werden.

6. WDM Übertragungssystem bestehend aus mindestens einem Sender (12), einer Übertragungsstrecke (6) und mindestens einem Empfänger (13), wobei senderseitig eingehende Datenkanäle (1) auf Wellenlängenkanäle (14) umgesetzt und mindestens einem Multiplexer (3) zugeführt werden, und wobei empfängerseitig ein Demultiplexer (8) das Wellenlängenmultiplex (7) wieder in Datenkanäle (1) teilt, dadurch gekennzeichnet, daß senderseitig ein Mittel (2) zur Verteilung der Daten der unterschiedlichen Datenkanäle auf unterschiedliche Wellenlängenkanäle vorgesehen ist und empfangsseitig ein Mittel (10) zur Rückverteilung der Daten der Wellenlängenkanäle (14) auf Datenkanäle (1 ) vorliegt.

7. WDM Übertragungssystem bestehend aus mindestens einem Sender (12), einer Übertragungsstrecke (6) und mindestens einem Empfänger (13), wobei senderseitig eingehende Datenkanäle (1) auf Wellenlängenkanäle (14) umgesetzt und mindestens einem Multiplexer (3) zugeführt werden, und wobei empfängerseitig ein Demultiplexer (8) das Wellenlängenmultiplex (7) wieder in Datenkanäle (1) teilt, dadurch gekennzeichnet, daß senderseitig ein Mittel (3) zum Einfügen von redundanten Informationen sowie ein Mittel (2) zur Verteilung der Daten der unterschiedlichen Datenkanäle (1) auf Wellenlängenkanäle (14) vorgesehen ist und empfangsseitig ein Mittel (10) zur Rückverteilung der Daten auf Datenkanäle und ein Mittel (11) zur Rekonstruktion der Datenkanäle vorliegt.
